# EUROPEAN PATENT APPLICATION

(11) **EP 0 680 690 A1**
(43) Date of publication of application: **08.11.1995**
(21) Application number: 94400967.9
(22) Date of filing: 04.05.1994
(51) Int. Cl.: A01G 7/00

(54) **Method for cultivating agricultural products**

(71) Applicant: Yoshida, Tadayuki, Fukuoka-shi, Fukuoka (JP)
(72) Inventor: Yoshida, Tadayuki, Fukuoka-shi, Fukuoka (JP)
(74) Representative: Levy, David

(57) **Abstract**

Method for cultivating agricultural product using nutritious agent which becomes sublimated to be absorbed in leaves is disclosed. In a vinyl-made house, a plurality of containers containing nutritious agent which becomes sublimated to be absorbed in leaves are suspended in air or placed in place so that the sublimated nutritious agent is diffused in air and is absorbed in leaves of the agricultural products. As such a nutritious agent to be absorbed in leaves, ammonium carbonate, ammonium bicabonate, ammonium acetate, ammonium nitrate, ammonium sulfate or urea can be employed.

## Description

### Background of Invention

The present invention relates to a method for cultivating agricultural products using a nutritious agent which becomes sublimated to be absorbed in leaves in a vinyl-made house or the like.

Conventionally, nitrogen, phosphoric acid, pottasium have been mainly used as agricultural fertilizers. These fertilizers are spreaded on the ground and are absorbed in the agricultural products through the roots thereof to promote the growth of the agricultural products.

These fertilizer components are combined with carbohydrate which is produced within the plant as carbon source and synthesize protein and promote the growth of leaves and stems of the plants and give rise to abundant fruits.

On the other hand, continuous supply of the above-mentioned inorganic fertilizers to the soil for many years causes the oxidization or infertility of the soil, which results in the occurrence of various agricultural illness or the decrease of harvest.

Accordingly, to cope with the situation, the review of agriculture has started including the improvement of the soil.

Furthermore, in recent years, in the cultivation of the agricultural products, it has been found that the agricultural products can absorb the nutritions from or by way of leaves thereof and, accordingly, various agents to be spreaded on leaves have been developed.

Conventional agents to be spreaded on leaves, however, are first dissolved in water and then such water is sprayed on the leaves of agricultural products making use of spraying machines. These spraying machines, however, are rather expensive and the spraying operation requires a considerable physical works or labors.

In another method, the atmosphere in the vinyl-made house is held at a considerably high temperature and at a considerably high humidity, and carbonic acid gas is charged in the vinyl-made house to promote the photosynthesis of the agricultural products so as to increase the harvest.

This method, however, cannot maitain the fertilizing effect thereof for many days and loses such an effect in a short period, while the method requires a huge investment for installation or facilities so that it is difficult for an ordinary farmer to implement or adapt the method.

Accordingly, it is an object of the present invention to provide a method for cultivating agricultural products which can overcome or solve above problems.

### Summary of Invention

This invention provides a method for cultivating agricultural products characterized in that a plurality of containers containing nutritious agent which becomes sublimated to be absorbed in leaves are suspended in air or placed in place in an enclosed house such as a vinyl-made house, the sublimated nutritious agent is diffused in air to make the nutritious agent absorbed in leaves of agricultural products.

The above method is also characterized by the selection of following agents as preferable nutritious agents to be absorbed in leaves.
a) Nutritious agent to be absorbed in leaves is ammonium carbonate (NH₄HCO₃ NH₂CONH₄).
b) Nutritious agent to be absorbed in leaves is ammonium bicarbonate (NH₄HCO₃).
c) Nutritious agent to be absorbed in leaves is ammonium acetate (CH₃COONH₄).
d) Nutritious agent to be absorbed in leaves is ammonium nitrate (NH₄NO₃).
e) Nutritious agent to be absorbed in leaves is ammonium sulfate ((NH₄)₂SO₄).
f) Nutritious agent to be absorbed in leaves is urea ( CO(NH₂) ₂) and the urea is heated to be sublimated.

The method for cultivating the agricultural products according to this invention is explained hereinaf ter.

Firstly, nutritious agent to be absorbed in leaves, which is applicable to the method of this invention must be nutritious agent which becomes sublimated and must have a high leaf absorbing effect or property. Accordingly, the above-mentioned ammonium carbonate, ammonium bicarbonate, ammonium acetate, ammonium nitrate, ammonium sulfate and urea are chosen.

Among the above-mentioned nutritious agents to be absorbed in leaves, since the ammonium carbonate, ammonium bicarbonate, ammonium acetate, ammonium nitrate and ammonium sulfate become sublimated at a room temperature or an ordinary temperature because of its low sublimation temperature.

Accordingly, if these nutritious agents are suspended in air or placed a any desired positions in the vinyl-made house, the nutritious agents which are in a powdery solid form gradually become sublimated and the components of the nutritious agents to be absorbed in leaves are diluted or spread in air.

With respect to urea, since the sublimation temperature thereof is higher than a room temperature or an ordinary temperature, it must be constantly heated to promote sublimation or vaporization thereof.

Since the above-mentioned nutritious agents to be absorbed in leaves are not harmful to human bodies and the use thereof is considered to be admitted by Food Hygienic Law of any advanced countries so that even if the agents are used in the cultivation of agricultural products in the vinyl-made house, it gives rise to no danger.

As the container for storing or accommodating the above-mentioned nutritious agent, any container can be used provided that the container can firmly hold the nutritious agent therein while it is suspended in air or can be placed in place and that the container is provided with apertures through which sublimated or vaporized nutritious agent pass and is diluted in air. As an example, a vinyl-made bag or pouch may be used and multiplicity of apertures having either large diameter or small diameter may be formed in the bag.

In case urea is used as the nutritious agent to be absorbed in leaves, the container must also have a heat resistance since the container must be heated.

When the nutritious agent to be absorbed in leaves is used in a suspended form, the nutritious agent to be absorbed in leaves is filled in the container and the container is suspended from the ceiling of the vinyl-made house with suspending strings, wherein the number of containers to be suspended is decided corresponding to kinds and quantities of the agricultural products, the size of the vinyl-made house or the like.

When the nutritious agent to be absorbed in leaves is placed in place, the nutritious agent is filled in the containers and the containers are placed on the ground or on a desired board or shelf.

In this manner, according to this invention, the nutritious agent which becomes sublimated to be absorbed in leaves is employed, and such a nutritious agent to be absorbed in leaves is diluted in air, and the nutritious agent is absorbed in agricultural products through the leaves, whereby the growth of the agricultural products is enhanced with a least labor while requiring no special installation or facilities or administration.

According to the method of this invention for cultivating agricultural products, the nutritious agent which becomes sublimated to be absorbed in leaves is suspended in air or placed in place in the vinyl-made house, the nutritious agent is sublimated or vaporized, and the nutritious agent is automatically diluted or spreaded in air. Subsequently, the nitrogen and the carbon in the nutritious agent is directly absorbed in leaves by way of reactions such as photosynthesis and is used as nutritious in the agricultural products.

Namely, nitrogen and carbon contained in the nutritious agent to be absorbed in leaves is directly absorbed in the leaves of the agricultural products, and the growth of the agricultural products is drastically enhanced.

### Best Mode for Carrying Out Invention

### (Embodiment 1)

Cucumbers were cultivated in a vinyl house having a surface area of approximately 600 m² and vinyl-made bags each of which contained 300 g of ammonium carbonate in a powdery form were suspended in vinyl-made house at 10 places.

The apertures were formed in the upper region of each vinyl-made bag and these bags were held in place in the vinyl-made house.

The ammonium carbonate was refilled in the vinyl-made bags every 20 days and after a lapse of three months, the cucumbers were harvested and the harvest amount was 16.8 ton per 10 are of the vinyl-made house.

### (Control 1)

In a vinyl-made house having the same surface area and cultivating the same amount of cucumbers as in the embodiment 1, the conventional inorganic fertilizers were supplied to the soil. Other cultivating conditions were the same as those of the embodiment 1.

After a lapse of three months, cucumbers were harvested and the harvest amount was 7.8 tons per 10 are of the vinyl-made house.

### (Embodiment 2)

With the same cultivating conditions and the same cultivating manner as those of the embodiment 1, the vinyl-made bags each of which contained 100 g of ammonium bicarbonate were suspended in the vinyl-made house at 30 places.

The ammonium bicarbonate was refilled in the vinyl-made bags every 20 days.

After three months, cucumbers were harvested and the harvest amount was 17.2 ton per 10 are of the vinyl house.

### (Embodiment 3)

With the same cultivating conditions and the same cultivating manner as those of the embodiment 1, the vinyl-made bags, each of which contained 100 g of ammonium acetate were suspended in the vinyl house at 30 places.

The ammonium acetate was refilled in the vinyl-made bags every 20 days.

After three months, cucumbers were harvested and the harvest amount was 12.9 tons per 10 a of the vinyl-made house.

### (Embodiment 4)

With the same cultivating conditions and the same cultivating manner as those of the embodiment 1, 600g of urea was filled in a heat-resisting container made of heat-resisting glass or ceramic, and the container was heated at a temperature of about 130° C by a heater such as a burner so as to make urea become sublimated.

Devices each of which comprises such a heater and a container filled with urea were set in the vinyl-made house at 3 places. Urea was refilled in the container every 20 days.

After three months, cucumbers were harvested and the harvest amount was 16.9 tons per 10 are of the vinyl-made house.

### (Embodiment 5)

With the same cultivating conditions and the same cultivating manner as the embodiment 1, cucumbers were cultivated provided that the same amount of ammonium carbonate as the embodiment 1 was filled in a pan-like container and the container was placed on the soil or ground.

The same result as that of the embodiment 1 was obtained.

According to this invention, a plurality of containers containing nutritious agent which becomes sublimated to be absorbed in leaves are suspended in air or placed on soil in a house such as a vinyl-made house so that the sublimated nutritious agent is diffused in air and is absorbed in leaves of the agricultural products, whereby the absorption rate of the nutritious agent to the agricultural products is promoted resulting in the enhancement of the growth of the agricultural products.

Furthermore, according to this invention, by merely suspending or placing the containers each containing the nutritious agent to be absorbed in leaves in the vinyl-made house, the increase of harvest is assured thus an expensive installation or facilities and administration are unnecessitated.

Still furthermore, since the nutritious agent to be absorbed in leaves which is filled in the containers gradually becomes sublimated, the effect of the nutritious agent can be maintained constantly for a long period provided that the nutritious agent is periodically refilled observing the consumption rate thereof in the container.

## Claims

1. Method for cultivating agricultural products characterized in that a plurality of containers containing nutritious agent which becomes sublimated to be absorbed in leaves are suspended in air or placed in place in a house, the sublimated nutritious agent is diffused in air to make the nutritious agent absorbed in leaves of agricultural products.

2. Method for cultivating agricultural products according to claim 1, wherein said house is a vinyl-made house.

3. Method for cultivating agricultural products according to claim 1, wherein said nutritious agent to be absorbed in leaves is ammonium carbonate.

4. Method for cultivating agricultural products according to claim 1, wherein said nutritious agent to be absorbed in leaves is ammonium bicarbonate.

5. Method for cultivating agricultural products according to claim 1, wherein said nutritious agent to be absorbed in leaves is ammonium acetate.

6. Method for cultivating agricultural products according to claim 1, wherein said nutritious agent to be absorbed in leaves is ammonium nitrate.

7. Method for cultivating agricultural products according to claim 1, wherein said nutritious agent to be absorbed in leaves is ammonium sulfate.

8. Method for cultivating agricultural products according to claim 1, wherein said nutritious agent is urea and said urea is heated to be sublimated.
